(19) **Europäisches Patentamt / European Patent Office / Office européen des brevets**

(11) **EP 4 528 903 A1**

(12) **EUROPEAN PATENT APPLICATION**
published in accordance with Art. 153(4) EPC

(43) Date of publication:
26.03.2025 Bulletin 2025/13

(21) Application number: 23886320.3

(22) Date of filing: 02.11.2023

(51) International Patent Classification (IPC):
$H01M\ 50/417\ ^{(2021.01)}$    $H01M\ 50/489\ ^{(2021.01)}$
$H01M\ 50/446\ ^{(2021.01)}$    $H01M\ 50/403\ ^{(2021.01)}$
$H01M\ 50/451\ ^{(2021.01)}$    $H01M\ 10/052\ ^{(2010.01)}$

(52) Cooperative Patent Classification (CPC):
H01M 10/052; H01M 50/403; H01M 50/417;
H01M 50/446; H01M 50/451; H01M 50/489;
Y02E 60/10

(86) International application number:
PCT/KR2023/017406

(87) International publication number:
WO 2024/096625 (10.05.2024 Gazette 2024/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 02.11.2022 KR 20220144748

(71) Applicant: LG Energy Solution, Ltd.
Seoul 07335 (KR)

(72) Inventors:
• BAE, Won-Sik
  Daejeon 34122 (KR)
• KIM, Kyung-Tae
  Daejeon 34122 (KR)
• LEE, So-Yeong
  Daejeon 34122 (KR)
• JEONG, So-Mi
  Daejeon 34122 (KR)

(74) Representative: Hoffmann Eitle
Patent- und Rechtsanwälte PartmbB
Arabellastraße 30
81925 München (DE)

(54) **SEPARATOR SUBSTRATE FOR ELECTROCHEMICAL DEVICE, AND SEPARATOR COMPRISING SAME**

(57) The present disclosure relates to a separator substrate, a separator and an electrochemical device comprising the same, and the separator substrate of the present disclosure is a separator substrate for an electrochemical device comprising a crosslinked polyolefin resin and chromium (Cr) wherein the crosslinked polyolefin resin comprises a silicon-containing organic group grafted to a polyolefin chain, a gel fraction of the separator substrate is 3% to 80%, a standard deviation ($\triangle$d) of thickness measured in at least 100 random points is 0.5 $\mu$m or less, and a number of spots having a long side of 50 $\mu$m or more in length per $1m^2$ is 10 or less.

FIG. 1

```
PG0
L=26.442 mm
A=54.023 mm^2

PG1
L=15.629 mm
A=18.461 mm^2
```

EP 4 528 903 A1

**Description**

## TECHNICAL FIELD

The present disclosure relates to a separator substrate for an electrochemical device, a separator comprising the same and an electrochemical device comprising the same.

The present application claims priority to Korean Patent Application No. 10-2022-0144748 filed on November 2, 2022 in the Republic of Korea, the disclosure of which is incorporated herein by reference.

## BACKGROUND ART

Secondary batteries including lithium ion secondary batteries are widely used as a source of power for portable electronic devices such as laptop computers, mobile phones, digital cameras, camcorders and so on. Recently, these batteries are being used in a wide range of applications including vehicles due to their high energy density.

Lithium secondary batteries have much higher operating voltage and energy density than traditional batteries using aqueous electrolyte solutions such as Ni-MH, Ni-Cd, lead-acid batteries, and by virtue of these advantages, lithium secondary batteries are gaining much attention. However, lithium ion batteries have a safety related risk of fire and explosion due to the use of organic electrolytes, and require a laborious and fastidious manufacturing process. More recently, lithium ion polymer batteries evolved from lithium ion batteries are regarded as one of next-generation batteries, but still have lower battery capacity than lithium ion batteries and insufficient discharge capacity especially at low temperature, so improvement is an urgently needed.

Evaluating stability and ensuring safety of electrochemical devices is very grave. With regard to the safety characteristics of electrochemical devices, there is great concern about explosion when thermal runaway occurs due to overheating or separators get punctured. Particularly, polyolefin-based separator substrates commonly used in separators for electrochemical devices show severe thermal shrinkage behaviors at 100°C or higher due to the properties of the material and the characteristics of the manufacturing process including stretching, causing short circuits between positive and negative electrodes.

To overcome the safety issue of electrochemical devices, separators having porous inorganic coating layers have been suggested, in which the porous inorganic coating layer is formed by coating a mixture of an excess of inorganic particles and a binder polymer on at least one surface of a separator substrate having pores, and there is a continued need for further enhanced safety.

## SUMMARY

### Technical Problem

The present disclosure is directed to providing a separator substrate with enhanced thickness uniformity and heat resistance, and a separator with enhanced thickness uniformity and heat resistance using the same. The present disclosure is further directed to providing an electrochemical device with improved stability and high resistance characteristics.

### Technical Solution

To solve the above-described problem, according to an aspect of the present disclosure, there is provided a separator substrate of the following embodiments.

The separator substrate according to a first embodiment is a separator substrate for an electrochemical device comprising a crosslinked polyolefin resin and chromium (Cr), wherein the crosslinked polyolefin resin comprises a silicon-containing organic group grafted to a polyolefin chain, a gel fraction of the separator substrate is 3% to 80%, a standard deviation ($\triangle$d) of thickness measured in at least 100 random points is 0.5 $\mu$m or less, and a number of spots having a long side of 50 $\mu$m or more in length per 1m² is 10 or less.

According to a second embodiment, in the first embodiment, the silicon-containing organic group may be a residue from a silane compound with a vinyl group, and the silane compound with the vinyl group may include vinyltrimethoxysilane, vinyltriethoxysilane, vinyltriacetoxysilane, (3-methacryloxypropyl)trimethoxysilane, (3-methacryloxypropyl)triethoxysilane, vinylmethyldimethoxysilane, vinyl-tris(2-methoxyethoxy)silane, vinylmethyldiethoxysilane or a mixture thereof.

According to a third embodiment, in the first or second embodiment, the chromium may be included in an amount of 0.1 to 20 ppm.

According to a fourth embodiment, in any one of the first to third embodiments, the gel fraction of the separator substrate may be 3% to 50%.

According to a fifth embodiment, in any one of the first to fourth embodiments, a crosslink structure in the crosslinked polyolefin resin may include a structure resulting from radical polymerization reaction between vinyl groups through a medium of a thermal initiator.

According to a sixth embodiment, in the fifth embodiment, the thermal initiator may include a peroxide-based compound, a persulfate-based compound, an azo-based compound or a mixture thereof.

According to a seventh embodiment, in any one of the first to sixth embodiments, the separator substrate for the electrochemical device may further comprise at least one of titanium (Ti), aluminum (Al), magnesium (Mg), zirconium (Zr) or vanadium (V).

According to an eighth embodiment, in any one of the first to seventh embodiments, the standard deviation ($\triangle$d) of thickness measured in the at least 100 random points of the separator substrate may be 0.3 $\mu$m or less.

According to another aspect of the present disclosure, there is provided a method for manufacturing a separator substrate of the following embodiments.

The method for manufacturing the separator substrate according to a ninth embodiment comprises carrying out melt extrusion of a raw material comprising a polyolefin resin to obtain a molten polymer extrudate; forming and stretching the obtained molten polymer extrudate to obtain a polymer sheet; applying a coating solution containing a thermal initiator and a silane compound with a vinyl group to the polymer sheet; and drying and heat-setting the polymer sheet coated with the coating solution, wherein the polyolefin resin includes a polyolefin resin prepared using an olefin polymerization catalyst containing chromium.

According to a tenth embodiment, in the ninth embodiment, the polyolefin resin as the raw material may include a polyolefin resin having 100 or more terminal vinyl groups per 1,000,000 carbon atoms.

According to an eleventh embodiment, in the ninth or tenth embodiment, the raw material may further comprise a polyolefin resin prepared using an olefin polymerization catalyst free from chromium (Cr) and containing at least one of titanium (Ti), aluminum (Al), magnesium (Mg), zirconium (Zr) or vanadium (V).

According to a twelfth embodiment, in any one of the ninth to eleventh embodiments, the polyolefin resin prepared using the olefin polymerization catalyst containing chromium may be included in an amount of 10 wt% or more based on a total weight of the polyolefin resin as the raw material.

According to still another aspect of the present disclosure, there is provided a separator of the following embodiments.

The separator according to a thirteenth embodiment comprises the separator substrate according to any one of the first to eighth embodiments; and an inorganic coating layer on at least one surface of the separator substrate, wherein the inorganic coating layer comprises inorganic particles and a binder material.

According to yet another aspect of the present disclosure, there is provided an electrode assembly of the following embodiments.

The electrode assembly according to a fourteenth embodiment comprises a positive electrode, a negative electrode and the separator according to the thirteenth embodiment between the positive electrode and the negative electrode.

## Advantageous Effects

The separator substrate according to an embodiment of the present disclosure includes a large number of crosslink structures in polyolefin chains, thereby improving thickness uniformity and heat resistance. This may have a beneficial effect on stability while in operation such as heat resistance characteristics in the electrochemical device including the separator using the separator substrate.

In particular, the separator substrate according to an embodiment of the present disclosure is manufactured using the polyolefin resin including a large number of terminal vinyl groups, prepared using the olefin polymerization catalyst containing chromium, and the thermal initiator for crosslinking between the terminal vinyl groups. Due to the large number of crosslink structures between the polyolefin chains, the separator substrate may have the improved thickness uniformity and heat resistance, and since the separator substrate comprises the silicon-containing organic groups grafted to the polyolefin chains, improved electrolyte wettability may be achieved, but the mechanism of the present disclosure is not limited thereto.

## BRIEF DESCRIPTION OF THE DRAWINGS

The accompanying drawings illustrate an exemplary embodiment of the present disclosure and together with the above detailed description, serve to provide a further understanding of the technical aspect of the present disclosure, and thus, the present disclosure should not be construed as being limited to the drawings.

FIG. 1 shows a wettability evaluation result of a separator substrate according to Example 1 in the present disclosure.
FIG. 2 shows a wettability evaluation result of a separator substrate according to Example 2 in the present disclosure.
FIG. 3 shows a wettability evaluation result of a separator substrate according to Comparative Example 1 in the present disclosure.

## DETAILED DESCRIPTION

Hereinafter, the present disclosure will be described in detail.

The present disclosure relates to a separator substrate for an electrochemical device, a separator comprising the same and an electrochemical device comprising the same. In the present disclosure, the electrochemical device is a device that converts chemical energy to electrical energy by electrochemical reactions, and is a concept encompassing a primary battery and a secondary battery. The secondary battery can be recharged, and is a concept encompassing a lithium ion battery, a nickel-cadmium battery, a nickel-hydrogen battery and so on.

First, a separator substrate for an electrochemical device according to an aspect of the present disclosure will be described in detail.

The separator substrate for the electrochemical device according to an aspect of the present disclosure comprises a crosslinked polyolefin resin and chromium (Cr), wherein the crosslinked polyolefin resin comprises silicon-containing organic groups grafted to polyolefin chains, gel fraction of the separator substrate is 3% to 80%, the standard deviation ($\triangle$d) of thickness measured in at least 100 random points is 0.5 $\mu$m or less, and the number of spots having the long side of 50 $\mu$m or more in length per 1m$^2$ is 10 or less.

According to an embodiment of the present disclosure, the polyolefin resin is not limited to a particular monomer and may include any monomer used in a porous separator substrate. The polyolefin resin may include, for example, polyethylene, polypropylene, polybutylene, polypentene, polyhexene, polyoctene, a homopolymer of a monomer selected from ethylene, propylene, butene, pentene, 4-methylpentene, hexene and octene, or a copolymer of two or more of them; or a mixture thereof, but is not limited thereto.

In a method for manufacturing the separator substrate as described below, the polyolefin resin includes polyolefin resins prepared using olefin polymerization catalysts containing chromium (Cr), and thus the separator substrate according to an aspect of the present disclosure includes chromium (Cr). Specifically, the separator substrate includes chromium as the residue of a chromium catalyst used for the polymerization of the polyolefin resin.

In an embodiment of the present disclosure, for example, the olefin polymerization catalyst containing chromium may comprise chromium oxide and a support on which the chromium oxide is supported, and the support may comprise, for example, at least one of silica, titania, alumina, zirconia or aluminum phosphate, but the present disclosure is not limited thereto.

In an embodiment of the present disclosure, the chromium content in the separator substrate may be, for example, 0.1 to 20 ppm, 1 to 10 ppm, or 5 to 10 ppm, but is not limited thereto. For example, the chromium content in the separator substrate may be a value measured using an inductively coupled plasma-mass spectrometer (ICP-MS). When the chromium content in the separator substrate is within the above-defined range, it may be advantageous in terms of the number of vinyl groups in the polyolefin resin before crosslinking and the degree of crosslinking of the crosslinked polyolefin resin prepared using the same, but the present disclosure is not limited thereto.

According to an embodiment of the present disclosure, the polyolefin resin prepared using the olefin polymerization catalyst containing chromium is characterized by including a large number of terminal vinyl groups that are crosslinked when activated by a thermal initiator contained in a coating solution in the subsequent process. Accordingly, the separator substrate may comprise the polyolefin resin in which a large number of crosslink structures are formed between polyolefin chains by crosslinking reaction induced by the thermal initiator.

Additionally, according to an embodiment of the present disclosure, the polyolefin resin prepared using the olefin polymerization catalyst containing chromium is characterized by including a large number of active terminal vinyl groups that provide grafting sites of a silane compound with vinyl groups contained in the coating solution in the subsequent process. Accordingly, the separator substrate may comprise silicon-containing organic groups by grafting the large number of silane compound with vinyl groups through the terminal vinyl groups.

The 'crosslinked polyolefin resin' as used herein refers to the polyolefin resin in which crosslink structures are formed in the chains and/or between the chains when the vinyl groups present in the chains of the polyolefin resin used as the raw material of the separator substrate are activated by initiation reaction.

Specifically, the crosslinked polyolefin resin may include a C(Sp$^2$)-C(Sp$^2$) bond crosslink structure by the polymerization reaction between a radical formed by the thermal initiator-induced activation of the vinyl group present at one terminal in the polyolefin chain and a radical in the polyolefin chain of another molecule and/or a radical at the other terminal in the polyolefin chain of the same molecule.

Additionally, in an embodiment of the present disclosure, the 'silicon-containing organic groups grafted to the polyolefin chains' may refer to residues from the silane compound with vinyl groups by new covalent bonds at activation sites at which vinyl groups present in the chains of the polyolefin resin used as the raw material of the separator substrate and vinyl groups present in the silane compound with vinyl groups are activated by initiation reaction.

In an embodiment of the present disclosure, the silicon-containing organic groups may refer to organic residues from the silane compound with vinyl groups, and the silane compound with vinyl groups may include, for example, vinyltrimethoxysilane, vinyltriethoxysilane, vinyltriacetoxysilane, (3-methacryloxypropyl)trimethoxysilane, (3-methacryloxypropyl)triethoxysilane, vinylmethyldimethoxysilane, vinyl-tris(2-methoxyethoxy)silane, vinylmethyldiethoxysilane or a mixture thereof, but the present disclosure is not limited thereto.

In an embodiment of the present disclosure, the crosslinked polyolefin resin may include no terminal vinyl group or a smaller number of terminal vinyl groups than the number of terminal vinyl groups present in the polyolefin resin before crosslinking.

In a similar aspect, the crosslinked polyolefin resin may include a larger number of $C(Sp^2)$-$C(Sp^2)$ bonds than the number of $C(Sp^2)$-$C(Sp^2)$ bonds contained in the polyolefin resin before crosslinking.

In an embodiment of the present disclosure, the polyolefin resin prepared using the olefin polymerization catalyst containing chromium may include 100 or more, 200 or more, 300 or more, 400 or more, 500 or more, 600 or more, 700 or more, 800 or more, 900 or more, or 950 or more terminal vinyl groups per 1,000,000 carbon atoms when the number of functional groups is determined from the result of $^1$H-NMR spectrometry using a nuclear magnetic resonance (NMR) spectrometer (Bruker 500 NMR, 14.1 telsa). The upper limit of the number of terminal vinyl groups may be 1,500 or less, or 1,000 or less within the above-defined range, but is not limited thereto.

Accordingly, in an embodiment of the present disclosure, the number of terminal vinyl groups of the polyolefin resin before crosslinking may be 100 or more, 200 or more, 300 or more, 400 or more, 500 or more, 600 or more, 700 or more, 800 or more, 900 or more, or 950 or more per 1,000,000 carbon atoms.

In another embodiment of the present disclosure, in addition to the polyolefin resin prepared using the olefin polymerization catalyst containing chromium, when the separator substrate further comprises a polyolefin resin prepared using another catalyst, the number of terminal vinyl groups of the polyolefin resin before crosslinking and the amount of terminal vinyl groups of the polyolefin resin before crosslinking are preferably determined based on the number of terminal vinyl groups of the total polyolefin resin and the amount of terminal vinyl groups of the total polyolefin resin.

As described above, the crosslink structures in the crosslinked polyolefin resin include structures resulting from radical polymerization reaction between vinyl groups through the medium of the thermal initiator.

In an embodiment of the present disclosure, the thermal initiator may include, but is not limited to, any initiator that activates the vinyl groups present in the polyolefin chains to form radicals. Specifically, the thermal initiator may include, but is not limited to, any initiator that activates the terminal vinyl groups present in the polyolefin chains to form radicals. The thermal initiator may include, for example, a peroxide-based compound, a persulfate-based compound, an azo-based compound or a mixture thereof.

The peroxide-based compound may include, for example, 2,5-dimethyl-2,5-di-(tert-butylperoxy)hexane (DHBP), benzoyl peroxide, acetyl peroxide, dilauryl peroxide, di-tert-butyl peroxide, dicumyl peroxide, cumyl peroxide, hydrogen peroxide, or a mixture thereof, but is not limited thereto.

The persulfate-based compound is not limited to a particular type and may include any compound including at least one of peroxymonosulfate ion ($SO_5^{2-}$) or peroxydisulfate ion ($S_2O_8^{2-}$) as an anion. The persulfate-based compound may include, for example, sodium peroxymonosulfate ($Na_2SO_5$), potassium peroxymonosulfate ($KHSO_5$), sodium peroxydisulfate ($Na_2S_2O_8$), ammonium peroxydisulfate (($NH_4$)$_2S_2O_8$), potassium peroxydisulfate ($K_2S_2O_8$) or a mixture thereof, but is not limited thereto.

The azo-based compound may include, for example, 2,2'-azobis(2-methylpropionitrile) (AIBN), but is not limited thereto.

In an embodiment of the present disclosure, as described above, in addition to the polyolefin resin prepared from the olefin polymerization catalyst containing chromium, the separator substrate may further comprise the polyolefin resin prepared from another type of olefin polymerization catalyst.

For example, another type of olefin polymerization catalyst may be an olefin polymerization catalyst including at least one of titanium (Ti), aluminum (Al), magnesium (Mg), zirconium (Zr) or vanadium (V). Accordingly, the separator substrate may further include at least one of titanium (Ti), aluminum (Al), magnesium (Mg), zirconium (Zr) or vanadium (V).

In an embodiment of the present disclosure, another type of olefin polymerization catalyst may be, for example, a metallocene catalyst, a Ziegler-Natta catalyst or a mixture thereof, but the present disclosure is not limited thereto.

In the present disclosure, the polyolefin resin prepared using the olefin polymerization catalyst containing chromium may be referred to as 'Cr-type polyolefin', and the polyolefin resin prepared using another type of olefin polymerization catalyst may be referred to as 'ZT-type polyolefin'.

In an embodiment of the present disclosure, when the separator substrate comprises the polyolefin resin prepared using the olefin polymerization catalyst containing chromium and the polyolefin resin prepared using another type of olefin polymerization catalyst, a weight ratio of the Cr-type polyolefin to the ZT-type polyolefin may be 1:9 to 9:1, specifically 2:8 to 8:2, 3:7 to 7:3, or 5:5, but is not limited thereto. When the separator substrate comprises the Cr-type polyolefin and the ZT-type polyolefin, it may be advantageous for the increased molecular weight of the separator substrate by the ZT-type polyolefin having high molecular weight, but the present disclosure is not limited thereto.

In an embodiment of the present disclosure, in addition to the polyolefin, the separator substrate may further comprise, for example, at least one of polymer resins such as polyethylene terephthalate, polybutylene terephthalate, polyacetal, polyamide, polycarbonate, polyimide, polyetherether ketone, polyether sulfone, polyphenylene oxide, polyphenylene sulfide, and polyethylene naphthalene. In addition, the separator substrate may include a non-woven fabric or a porous polymer film or a stack of two or more of them, but is not particularly limited thereto.

In an embodiment of the present disclosure, as described below, when the separator substrate comprises the polyolefin resin prepared using the olefin polymerization catalyst containing chromium, and a polyolefin sheet derived from the polyolefin resin is heat-set in the process of manufacturing the separator substrate, the crosslink structures may be formed in the chains and/or between the chains in the polyolefin resin by the radical polymerization reaction through the medium of the thermal initiator, thereby improving thickness uniformity and heat resistance of the separator substrate as well as the outward appearance characteristics of the separator substrate. Additionally, when the polyolefin sheet derived from the polyolefin resin is heat-set, the grafting of the silane compound with vinyl groups may improve the wettability of the separator substrate, but the mechanism of the present disclosure is not limited thereto.

The separator substrate according to an aspect of the present disclosure exhibits the gel fraction of 3% to 80%. This may be a characteristic of the separator substrate comprising the polyolefin resin having high degree of crosslinking, but the characteristics of the present disclosure are not limited thereto. The gel fraction of the separator substrate may be, for example, 3% to 70%, 3% to 60%, 3% to 50%, 3% to 45%, 3% to 40%, 3% to 30%, 3% to 20%, or 3% to 10%.

As described above, the polyolefin resin is characterized by exhibiting the high degree of crosslinking by the crosslink structures formed in the polyolefin chains and/or between the chains. Accordingly, the polyolefin resin before crosslinking dissolves in a benzene-based solvent, while the crosslinked polyolefin resin does not dissolve in a benzene-based solvent and the gel fraction is measurable.

**In** the present disclosure, the gel fraction may be measured as follows. First, 0.2 g of a separator substrate sample to be measured is placed in a 120 mesh-stainless steel net, and extraction is carried out in 100°C trichlorobenzene for 12 hours, followed by drying in a 100°C vacuum oven for 12 hours. Subsequently, the weight of the sample remaining in the stainless steel net is measured, and the gel fraction is measured according to the following equation. The gel fraction may be an average value of measurements of three samples to improve measurement accuracy.

$$\text{Gel fraction (\%)} = \{(\text{Remaining sample weight (g)})/0.2 \text{ g}\} * 100$$

In the separator substrate according to an aspect of the present disclosure, the standard deviation ($\triangle$d) of thickness measured in at least 100 random points is 0.5 $\mu$m or less. Therefore, the separator substrate may exhibit high thickness uniformity.

In an embodiment of the present disclosure, the standard deviation ($\triangle$d) of thickness measured in at least 100 random points of the separator substrate may be, for example, 0.5 $\mu$m or less, 0.45 $\mu$m or less, 0.40 $\mu$m or less, 0.35 $\mu$m or less, 0.3 $\mu$m or less, or 0.25 $\mu$m or less. As the standard deviation is closer to 0 $\mu$m, the thickness uniformity increases, and thus the lower limit of the standard deviation of thickness may be 0 $\mu$m.

The thickness of the separator substrate may be measured by a method for measuring the thickness of the separator substrate, and for example, the thickness may be a value measured through scanning electron microscopy (SEM) image analysis of the separator substrate or a known thickness measuring instrument. For example, the thickness measuring instrument may be VL-50S-B (e.g., available from Mitutoyo), but is not limited thereto.

In general, in the manufacture of the separator substrate, when polymer resin as the raw material and an additive such as a diluent, a crosslinking agent and the like are fed into an extruder all together to cause them to react with each other, side reaction occurs in the extruder, or some of the raw material are not molten due to insufficient mixing and spots having a brightness difference between the unmolten region and the other region are observed on the surface of the separator substrate.

The 'spot' as used herein refers to a white spot-shaped region having higher brightness and lower transparency than the other region on the surface of the separator substrate.

In an embodiment of the present disclosure, the number of spots may be evaluated through observation with the naked eye or a microscope such as SEM.

In an embodiment of the present disclosure, the number of spots having the long side of 50 $\mu$m or more in length may be evaluated by placing the separator substrate to be observed on an observation plate equipped with backlight and observing the separator substrate.

According to an embodiment of the present disclosure, the separator substrate may have fewer spots and little defects in outward appearance by feeding the polyolefin resin as the raw material, forming the polyolefin sheet, and adding the thermal initiator and the silane compound with vinyl groups. For example, the separator substrate may have 10 or less spots having the long side of 50 $\mu$m or more in length per 1m$^2$. Specifically, in the above-described conditions, the number of spots may be 0 to 7, 0 to 5, or 0 to 3. When the number of spots is within the above-defined range, it may be advantageous for the prevention of non-coating caused by defects in outward appearance in the subsequent ceramic coating process and shorting in the battery.

In another embodiment of the present disclosure, the thickness of the separator substrate may be, for example, 4 to 20 $\mu$m. When the thickness of the separator substrate is within the above-defined range, it may have a beneficial effect on the conduction barrier function and the resistance of the separator, but the present disclosure is not limited thereto.

In an embodiment of the present disclosure, the weight average molecular weight (Mw) of the polyolefin resin included in the separator substrate may range, for example, 100,000 to 5,000,000. When the weight average molecular weight of the polyolefin resin is within the above-defined range, it may have a beneficial effect on the mechanical properties and shut-down characteristics of the separator substrate, but the present disclosure is not limited thereto.

In the present disclosure, the weight average molecular weight (Mw) of the polyolefin resin may be measured through gel permeation chromatography (GPC) (PL GPC220, Agilent Technologies) in the following conditions:

- Column: PL Olexis (Polymer Laboratories)
- Solvent: Trichlorobenzene (TCB)
- Flow rate: 1.0 mL/min
- Sample concentration: 1.0 mg/mL
- Injection amount: 200 $\mu$L
- Column temperature: 160°C
- Detector: Agilent High Temperature RI detector
- Standard: Polystyrene (fitted to a third degree polynominal)

In an embodiment of the present disclosure, the separator substrate may have a porous structure, and for example, the pore diameter may be 0.01 $\mu$m to 0.10 $\mu$m and the porosity may be 30% to 70%. When the pore diameter and porosity of the separator substrate are within the above-defined ranges, it may have a beneficial effect on the ion permeability and mechanical strength of the separator substrate, but the present disclosure is not limited thereto.

In an embodiment of the present disclosure, the separator substrate may have high heat resistance. For example, the separator substrate may have fracture temperature of 155°C or higher. For example, the fracture temperature of the separator substrate may be 160°C or higher, 170°C or higher, 180°C or higher, 190°C or higher, 195°C or higher, or 200°C or higher. As the fracture temperature of the separator substrate increases, the separator substrate has higher heat resistance. Accordingly, the upper limit of the fracture temperature of the separator substrate is not limited to a particular range, and may be, for example, 500°C or lower, 450°C or lower, 350°C or lower, or 300°C or lower.

In the present disclosure, the fracture temperature of the separator substrate may be measured using a thermomechanical analyzer (TMA) in a way that a load of 0.01 N is applied to the separator substrate sample to be measured and the extent of deformation is observed while increasing the temperature at a rate of 5°C/min, and as the temperature rises, the separator substrate shrinks and expands, and the temperature at the time the sample breaks is measured as the fracture temperature.

In an embodiment of the present disclosure, the separator substrate may be characterized by having the improved wettability due to the inclusion of the silicon-containing organic groups grafted to the polyolefin chains as described above.

In an embodiment of the present disclosure, the 'wettability' of the separator substrate refers to the ability to transmit the electrolyte solution, and may be evaluated by a method commonly used to evaluate electrolyte permeability, and for example, the evaluation method may include dripping a droplet of a predetermined amount of electrolyte solution on the separator substrate, and measuring an area to which the electrolyte solution spread out after a predetermined time. It may be evaluated that as the area to which the droplet of electrolyte solution spread out for the equal time is larger, the electrolyte wettability is higher.

As described above, the separator substrate for the electrochemical device according to an aspect of the present disclosure comprises the polyolefin resin prepared using the olefin polymerization catalyst containing chromium and the thermal initiator and the silane compound with vinyl groups used when heat-setting the polyolefin sheet stretched from the polyolefin resin to form the crosslink structures between the polyolefin chains, and the grafted silicon-containing organic groups, thereby improving the outward appearance characteristics, thickness uniformity, heat resistance and wettability, but the present disclosure is not limited thereto.

Subsequently, a method for manufacturing a separator substrate for an electrochemical device according to another aspect of the present disclosure will be described in detail.

The method for manufacturing the separator substrate for the electrochemical device according to another aspect of the present disclosure includes carrying out melt extrusion of the raw material comprising polyolefin resin to obtain a molten polymer extrudate; forming and stretching the obtained molten polymer extrudate to obtain a polymer sheet; applying a coating solution containing a thermal initiator and a silane compound with vinyl groups to the polymer sheet; and drying and heat-setting the polymer sheet coated with the coating solution. In this instance, the polyolefin resin includes a polyolefin resin prepared using an olefin polymerization catalyst containing chromium.

First, the raw material comprising the polyolefin resin prepared using the olefin polymerization catalyst containing chromium undergoes melt extrusion to obtain the molten polymer extrudate.

In an embodiment of the present disclosure, for the melt extrusion, in addition to the polyolefin resin prepared using the olefin polymerization catalyst containing chromium, the raw material preferably comprises a diluent.

The diluent may include, for example, liquid or solid paraffin oil, mineral oil, wax, soybean oil and the like, commonly used to manufacture wet separators.

In an embodiment of the present disclosure, the diluent may include any diluent that allows for liquid-liquid phase separation between the polyolefin resin and the diluent, and for example, may include phthalic acid esters such as dibutyl phthalate, dihexyl phthalate, dioctyl phthalate; aromatic ethers such as diphenyl ether, benzyl ether; C10-C20 fatty acids such as palmitic acid, stearic acid, oleic acid, linolic acid, linoleic acid; C10-C20 fatty acid alcohols such as palmitic acid alcohol, stearic acid alcohol, oleic acid alcohol; fatty acid esters including palmitic acid mono-, di- or tri-ester, stearic acid mono-, di- or tri-ester, oleic acid mono-, di- or tri-ester, linoleic acid mono-, di- or tri-ester, resulting from the esterification of saturated or unsaturated fatty acids having 4~26 carbon atoms in a fatty acid group , or one or more fatty acids in which double bonds of unsaturated fatty acids are epoxidized, with C1-C10 alcohols having 1-8 hydroxyl groups; or a mixture thereof, but is not limited thereto.

In an embodiment of the present disclosure, the amount of the diluent may be 100 to 350 parts by weight, 125 to 300 parts by weight or 150 to 250 parts by weight based on 100 parts by weight of the polyolefin. When the total amount of the diluent satisfies the above-defined range, it may be possible to prevent the problems that occur due to the high polyolefin content, such as reductions in porosity and pore size, fewer connections between pores, very low permeability, high viscosity of the polyolefin composition and the rise in extrusion load, making processing difficult. It may be also possible to prevent the problems that occur due to the low polyolefin content, such as the polyolefin and the diluent not mixing well and insufficient thermodynamic interaction between them, causing gels in extrusion, resulting in failure in elongation and non-uniform thickness. However, the present disclosure is not limited thereto.

In an embodiment of the present disclosure, in addition to the polyolefin resin prepared using the olefin polymerization catalyst containing chromium and the diluent, the raw material may further comprise a polyolefin resin prepared using another type of olefin polymerization catalyst, for example, a Ziegler-Natta catalyst; or an olefin polymerization catalyst containing titanium (Ti), aluminum (Al), magnesium (Mg), zirconium (Zr), vanadium (V), or two or more of them, and other polymer resin. For more details of the polymer resin and the other polyolefin resin, reference is made to the above description.

For example, in an embodiment of the present disclosure, the raw material may further comprise a polyolefin resin prepared by olefin polymerization reaction using a Ziegler-Natta catalyst.

According to an embodiment of the present disclosure, among the raw materials, a weight ratio of the polyolefin resin (Cr-type polyolefin) prepared using the olefin polymerization catalyst containing chromium to the polyolefin resin (ZT-type polyolefin) prepared using another type of olefin polymerization catalyst may be 1:9 to 9:1, specifically 2:8 to 8:2, 3:7 to 7:3, or 5:5, but the present disclosure is not limited thereto.

According to another embodiment of the present disclosure, in addition to the Cr-type polyolefin, when the raw material further comprises the ZT-type polyolefin, the amount of the polyolefin resin prepared using the olefin polymerization catalyst containing chromium may be 10 wt% or more based on the total 100 wt% of the raw material. Specifically, the amount of the polyolefin resin prepared using the olefin polymerization catalyst containing chromium may be 15 wt% or more, 20 wt% or more, 25 wt% or more, 30 wt% or more, 35 wt% or more, 40 wt% or more, 45 wt% or more, 50 wt% or more, and/or 99.9 wt% or less, 99 wt% or less, 95 wt% or less, or 90 wt% or less based on the total 100 wt% of the raw material, but the present disclosure is not limited thereto.

In an embodiment of the present disclosure, the step of obtaining the molten polymer extrudate may be performed using a single screw extruder or a twin screw extruder commonly used in the art, but is not limited thereto.

Subsequently, the obtained molten polymer extrudate is formed and stretched to obtain the polymer sheet.

In an embodiment of the present disclosure, after the extrusion of the molten polymer extrudate, a cooled extrudate may be formed by casting or calendaring commonly used in the art by using a water-cooling or air-cooling process.

In an embodiment of the present disclosure, it may be possible to provide the separator substrate having the improved mechanical strength and puncture strength through the forming and stretching step.

In an embodiment of the present disclosure, the stretching may be performed by sequential or simultaneous stretching using rolls or a tenter. Each of the stretching ratio in the machine direction (MD) and the stretching ratio in the transverse direction (TD) may be 3 times or more, or 5 to 12 times, and the total stretching ratio may be 20 to 120 times.

When the stretching ratio satisfies the above-defined ratio, it may have a beneficial effect on the thickness uniformity of the separator substrate and the balance between physical properties in MD and physical properties in TD, but the present disclosure is not limited thereto.

In an embodiment of the present disclosure, the stretching temperature may change depending on the melting point of the polyolefin resin used and the concentration and type of the diluent, and the present disclosure is not limited thereto.

Subsequently, the diluent is extracted from the stretched polymer sheet to obtain the porous polymer sheet.

In an embodiment of the present disclosure, an organic solvent with high solubility for the diluent may be used to extract the diluent from the stretched sheet, followed by drying, to form the porous sheet.

The organic solvent is not limited to a particular type and may include any organic solvent that extracts the diluent used, but in terms of extraction efficiency and drying rate, methyl ethyl ketone, methylene chloride, hexane, etc. may be used.

In an embodiment of the present disclosure, the extraction method may include any solvent extraction method commonly used in the art, for example, an immersion method, a solvent spray method and a sonication method, used alone or in combination. In an embodiment of the present disclosure, the amount of diluent remaining after the extraction may be preferably 1 wt% or less. When the amount of residual diluent is within the above-defined range, it may have a beneficial effect on the permeability and mechanical properties of the separator substrate and the efficiency of the manufacturing process, but the present disclosure is not limited thereto.

The extraction time and temperature may change depending on the thickness of the polymer sheet and the type of the polymer, and the present disclosure is not limited thereto.

Subsequently, the coating solution comprising the thermal initiator and the silane compound with vinyl groups is applied to the polymer sheet.

In the present disclosure, the coating solution comprising the thermal initiator and the silane compound with vinyl groups is applied to the porous polymer sheet having the exposed pores. As described above, the thermal initiator may activate the terminal vinyl groups in the chains of the polyolefin resin to form radicals. Accordingly, the large number of crosslink structures may be formed in the polyolefin chains by the thermal initiator, and the coating solution may infiltrate into fibrils present on the surfaces of the pores, thereby improving the heat resistance of the separator substrate, but the present disclosure is not limited thereto. Additionally, the silane compound with vinyl groups may be included by grafting the silicon-containing organic groups through covalent bonds at the activation sites of the terminal vinyl groups in the chains of the polyolefin resin. Accordingly, it may be possible to improve the wettability of the separator substrate, but the present disclosure is not limited thereto.

In an embodiment of the present disclosure, a weight ratio of the thermal initiator to the silane compound with vinyl groups in the coating solution may be, for example, 2:8 to 8:2, and specifically 3:7 to 7:3 or 4:6 to 6:4. When the weight ratio of the thermal initiator to the silane compound with vinyl groups is within the above-defined range, it may be possible to adequately activate the vinyl groups in the chains of the polyolefin resin, inducing crosslinking and grafting reaction, thereby improving the wettability of the separator substrate, but the present disclosure is not limited thereto.

In an embodiment of the present disclosure, the coating solution may comprise a solvent for the thermal initiator and the silane compound with vinyl groups, for example, ethanol, propanol, acetone, NMP, DMAC, DMF, water or a mixture thereof. Additionally, the total solids content in the coating solution may be, for example, 5 wt% to 60 wt%, specifically 7 wt% to 40 wt% to improve the radical activation of double bonds and wettability of the separator substrate, but the present disclosure is not limited thereto.

In an embodiment of the present disclosure, if necessary, the coating solution may further comprise additives commonly used to improve specific functions, for example, a surfactant, an oxidation stabilizer, a UV stabilizer, an antistatic agent, a nucleating agent and the like, and the present disclosure is not limited thereto.

Subsequently, the polymer sheet coated with the coating solution is dried and heat-set to obtain the separator substrate.

The heat-setting is performed to stabilize the porous film, forcibly prevent the porous film from shrinking back by applying heat and relieve the residual stresses.

According to the method for manufacturing the separator substrate of the present disclosure, since the coating solution comprising the thermal initiator and the silane compound with vinyl groups is applied before the heat-setting, it may obtain the separator substrate based on the polyolefin resin in which the large number of crosslink structures are formed by the crosslinking reaction in the polyolefin chains and/or between the chains by the radical polymerization reaction through the medium of the thermal initiator during the heat-setting and the large number of silicon-containing organic groups are grafted to the terminals of the polyolefin chains.

In an embodiment of the present disclosure, the heat-setting temperature and time may change depending on the amount of vinyl groups in the polyolefin chains and the composition of the coating solution, and the present disclosure is not limited thereto.

According to another aspect of the present disclosure, there is provided a separator for an electrochemical device comprising the above-described separator substrate and an inorganic coating layer on at least one surface of the separator substrate, wherein the inorganic coating layer comprises inorganic particles and a binder material.

The inorganic coating layer may have a porous structure resulting from pores by the interstitial volume between the inorganic particles. The pore size and porosity (a ratio of pore volume) may be controlled based on the particle size and particle size distribution. This structure may enhance the resistance against metallic impurities present in the electrode and suppress the shrinking of the polyolefin separator as the substrate, thereby enhancing safety of the electrochemical device. In this regard, the inorganic coating layer may comprise the inorganic particles in an amount of 70 to 99.5 wt%, preferably 80 to 99 wt% based on 100 wt% of the inorganic coating layer.

In an embodiment of the present disclosure, the inorganic particles are not limited to a particular type and may include any inorganic particles that are electrochemically stable. That is, the inorganic particles that may be used in the present disclosure are not limited to a particular type and may include any inorganic particles in which oxidation and/or reduction does not occur in the operating voltage range (*e.g.,* 0 to 5V vs Li/Li$^+$) of the electrochemical device used. Particularly, when high dielectric constant inorganic particles are used as the inorganic particles, it may be possible to contribute to the increased degree of dissociation of an electrolyte salt, for example, a lithium salt, in a liquid electrolyte, thereby improving the ionic conductivity of the electrolyte solution.

For the above-mentioned reasons, the inorganic particles may preferably include high dielectric constant inorganic particles having the dielectric constant of 5 or more, and preferably 10 or more. Non-limiting examples of the inorganic particles having the dielectric constant of 5 or more may include at least one of $BaTiO_3$, $Pb(Zr,Ti)O_3$ (PZT), $Pb_{1-x}La_xZr_{1-y}Ti_yO_3$ (PLZT, $0 < x < 1$, $0 < y < 1$), $Pb(Mg_{1/3}Nb_{2/3})O_3$-$PbTiO_3$ (PMN-PT), hafnia ($HfO_2$), $SrTiO_3$, $SnO_2$, $CeO_2$, $MgO$, $Mg(OH)_2$, $NiO$, $CaO$, $ZnO$, $ZrO_2$, $SiO_2$, $Y_2O_3$, $Al_2O_3$, $AlOOH$, $Al(OH)_3$, $SiC$ or $TiO_2$.

In an embodiment of the present disclosure, the average particle size ($D_{50}$) of the inorganic particles is not limited to a particular range, but is preferably in a range between 0.1 $\mu$m and 2.5 $\mu$m to form the inorganic coating layer of uniform thickness and achieve optimal porosity.

In an embodiment of the present disclosure, the binder material may include an acrylic polymer and/or a PVDF-based polymer. For example, the acrylic polymer may include a (meth)acrylic polymer. The (meth)acrylic polymer includes (meth)acrylic acid ester as a monomer, and the monomer may include, for example, at least one of butyl (meth)acrylate, 2-ethylhexyl (meth)acrylate, ethyl (meth)acrylate, methyl (meth)acrylate, n-propyl (meth)acrylate, isopropyl (meth)acrylate, t-butyl (meth)acrylate, pentyl (meth)acrylate, n-octyl (meth)acrylate, isooctyl (meth)acrylate, isononyl (meth)acrylate, lauryl (meth)acrylate or tetradecyl (meth)acrylate. The PVDF-based polymer may include at least one of a homopolymer of vinylidene fluoride (*i.e.,* polyvinylidene fluoride), a copolymer of vinylidene fluoride with a copolymerizable monomer, or a mixture thereof. In an embodiment of the present disclosure, the monomer may include a fluorinated monomer and/or a chlorinated monomer. Non-limiting examples of the fluorinated monomer may include at least one of vinyl fluoride; trifluoroethylene (TrFE); chlorofluoroethylene (CTFE); 1,2-difluoroethylene; tetrafluoroethylene (TFE); hexafluoropropylene (HFP); perfluoro(alkylvinyl)ether such as perfluoro(methylvinyl)ether (PMVE), perfluoro(ethylvinyl)ether (PEVE) and perfluoro(propylvinyl)ether (PPVE); perfluoro(1,3-dioxole); or perfluoro(2,2-dimethyl-1,3-dioxol) (PDD). In an embodiment of the present disclosure, the PVDF-based polymer may include at least one selected from polyvinylidene fluoride (PVDF), polyvinylidene fluoride-co-hexafluoropropylene (PVDF-HFP), polyvinylidene fluoride-co-chlorofluoroethylene (PVDF-CTFE), polyvinylidene fluoride-co-tetrafluoroethylene (PVDF-TFE) or polyvinylidene fluoride-co-trifluoroethylene (PVDF-TrFE).

In an embodiment of the present disclosure, the separator may be manufactured by forming the inorganic coating layer on the separator substrate.

First, the binder material is dispersed or dissolved in a solvent to prepare a binder solution. Subsequently, inorganic particles dispersed with a bead mill are added to the binder solution to prepare a slurry for forming the inorganic coating layer. Non-limiting examples of the solvent may include one selected from the group consisting of water, acetone, tetrahydrofuran, methylene chloride, chloroform, dimethyl formamide, N-methyl-2-pyrrolidone (NMP) and cyclohexane, or a mixture of two or more of them.

The coating of the slurry on the separator substrate may be performed by any coating method known to those skilled in the art, and the coating method may include, for example, dip coating, die coating, roll coating, comma coating or a combination thereof. In addition, the drying may be performed by any drying method commonly used in the art, including natural drying, air blow drying and the like, but is not limited thereto.

An electrode assembly according to another aspect of the present disclosure comprises a positive electrode, a negative electrode and a separator between the positive electrode and the negative electrode, and in this instance, the separator is the above-described separator.

In the present disclosure, the positive electrode, the negative electrode and the electrode assembly may include those commonly used in the art, and its detailed description is omitted.

According to another aspect of the present disclosure, a secondary battery may be provided by placing the above-described electrode assembly in an appropriate case and injecting an electrolyte solution.

Hereinafter, the present disclosure will be described in more detail through examples. However, the following examples are provided for illustration only, and the scope of the present disclosure is not limited thereto.

[Preparation of separator substrate]

Example 1

9 kg/hr of Cr-type polyolefin (DL Chemical, TR570) as a raw material and 21 kg/hr of a diluent (Kukdong Oil & Chemicals Co. Ltd., LP350F) were fed into an extruder (Korea EM, Φ32 twin screw extruder, L/D = 56), followed by melt extrusion at 200°C to obtain a molten polyolefin extrudate.

The obtained molten polyolefin extrudate was allowed to pass through a T-die, shaped into a sheet using a cold casting machine, and subjected to biaxial stretching (MD stretching first and then TD stretching) using a tenter-type sequential stretching machine to obtain a polyolefin sheet. The MD stretching ratio and the TD stretching ratio were 7 times and 6 times, respectively, and the MD stretching temperature and the TD stretching temperature were 115°C and 125°C, respectively.

The diluent was extracted from the stretched polyolefin sheet using methylene chloride to obtain a porous polyolefin sheet.

Subsequently, a coating solution comprising 10 wt% of dicumyl peroxide as a thermal initiator and 20 wt% of vinyltrimethoxysilane as a silane compound with vinyl groups (a wetting agent) in ethanol as a solvent was applied to one surface of the porous polyolefin sheet.

Subsequently, the polyolefin sheet coated with the coating solution was dried and heat-set at 128°C to prepare a separator substrate. In this instance, the average thickness of the obtained separator substrate was 9.0 $\mu$m.

Example 2

A separator substrate was prepared by the same method as Example 1, except that 0.9 kg/hr of Cr-type polyolefin and 8.1 kg/hr of ZT-type polyolefin (Korea Petrochemical Ind. Co., Ltd., VH035) were used as the raw material (a weight ratio of Cr-type: ZT-type=1:9). In this instance, the average thickness of the obtained separator substrate was 9.0 $\mu$m.

Comparative Example 1

A separator substrate was prepared by the same method as Example 1, except that ZT-type polyolefin (Korea Petrochemical Ind. Co. Ltd., VH035) was used instead of the Cr-type polyolefin as the raw material and the step of applying the coating solution was not performed. In this instance, the average thickness of the obtained separator substrate was 9.1 $\mu$m.

Comparative Example 2

A separator substrate was prepared by the same method as Example 1, except that the step of applying the coating solution was not performed. In this instance, the average thickness of the obtained separator substrate was 9.0 $\mu$m.

Comparative Example 3

9 kg/hr of ZT-type polyolefin (Korea Petrochemical Ind. Co., Ltd., VH035) as a raw material, 100 g/hr of dicumyl peroxide as a thermal initiator, 100 g/hr of vinyltrimethoxysilane as a silane compound with vinyl groups and 21 kg/hr of liquid paraffin oil (Kukdong Oil & Chemicals Co. Ltd., LP350F) as a diluent were fed into an extruder (Korea EM, φ32 twin screw extruder, L/D=56), followed by melt extrusion at 200°C to obtain a molten polyolefin extrudate.

The obtained molten polyolefin extrudate was allowed to pass through a T-die, shaped into a sheet using a cold casting machine, and subjected to biaxial stretching (MD stretching first and then TD stretching) using a tenter-type sequential stretching machine to obtain a polyolefin sheet. The MD stretching ratio and the TD stretching ratio were 7 times and 6 times, respectively, and the MD stretching temperature and the TD stretching temperature were 115°C and 125°C, respectively.

The diluent was extracted from the stretched polyolefin sheet using methylene chloride to obtain a porous polyolefin sheet, followed by drying and heat-setting at 128°C to prepare a separator substrate. In this instance, the average thickness of the obtained separator substrate was 9.0 $\mu$m.

Comparative Example 4

A separator substrate was prepared by the same method as Comparative Example 3, except that Cr-type polyolefin (DL Chemical, TR570) was used as the raw material instead of the ZT-type polyolefin as the raw material. In this instance, the average thickness of the obtained separator substrate was 9.0 μm.

Comparative Example 5

A separator substrate was prepared by the same method as Example 1, except that ZT-type polyolefin (Korea Petrochemical Ind. Co. Ltd., VH035) was used instead of the Cr-type polyolefin as the raw material. In this instance, the average thickness of the obtained separator substrate was 9.0 μm.

Comparative Example 6

A separator substrate was prepared by the same method as Example 1, except that the silane compound with vinyl groups (wetting agent) was excluded from the coating solution. In this instance, the average thickness of the obtained separator substrate was 9.1 μm.

Comparative Example 7

A separator substrate was prepared by the same method as Example 1, except that 0.45 kg/hr of Cr-type polyolefin and 8.55 kg/hr of ZT-type polyolefin (Korea Petrochemical Ind. Co. Ltd., VH035) were used as the raw material. In this instance, the average thickness of the obtained separator substrate was 9.0 μm.

[Elemental analysis and physical property evaluation of separator substrate]

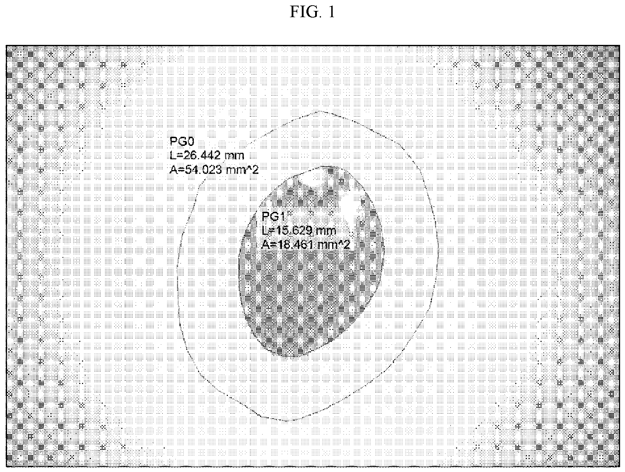

For each of Examples 1 and 2 and Comparative Examples 1 to 6, elemental analysis and physical property evaluation were performed as follows, and the results are shown in the following TABLE 1 and FIG. 1.

Measurement of gel fraction

First, 0.2 g of a separator substrate sample was placed in a 120-mesh stainless steel net, and extraction was carried out in 100°C trichlorobenzene for 12 hours, followed by drying in a 100°C vacuum oven for 12 hours.
Subsequently, the weight of the sample remaining in the stainless steel net was measured, and gel fraction was measured according to the following equation. The gel fraction was an average value of measurements of three samples.

$$\text{Gel fraction (\%)} = \{(\text{Remaining sample weight (g)}) / 0.2 \text{ g}\} * 100$$

Gel fraction (%) = {(Remaining sample weight (g)) / 0.2 g} * 100

Measurement of chromium (Cr) content and silicon (Si) content

First, the separator substrate sample was allowed to react with sulfuric acid and subjected to sulfation on a hot plate, and sulfuric acid was removed. Subsequently, the sample was burned in an electric furnace (temperature: 600°C) for 4 hours to decompose into nitric acid and hydrogen peroxide. Subsequently, the sample was dissolved and when it is transparent, it was diluted in ultrapure water three times to prepare a sample for analysis.
The chromium (Cr) content and silicon (Si) content in the separator substrate was measured using an inductively coupled plasma-mass spectrometer (ICP-MS) (Axiom MC model, Thermo Elemental Ltd., U.K.)

Measurement of aluminum (Al) content

When a Ziegler-Natta catalyst is used, aluminum (Al) is present on the separator substrate, and the aluminum content was measured.
The aluminum content was measured by the same method as the method for measuring the chromium content.

Fracture temperature

The fracture temperature of the as-prepared separator substrate was analyzed using a thermomechanical analyzer (TMA) (TA Instruments, TMA Q400).

Specifically, a load of 0.01 N was applied to the separator substrate, and the extent of deformation was observed while increasing the temperature at a rate of 5°C/min, and as the temperature rises, the separator substrate shrinks and expands, and the temperature at break was measured as 'fracture temperature'.

Measurement of number of spots

The separator substrate was placed on an observation plate equipped with backlight, and the number of spots having the long side of 50 $\mu$m or more in length per 1m$^2$ was observed and measured with the naked eyes.

Measurement of thickness uniformity

Thickness was measured at a total of 100 locations across the area of the separator substrate of 1 m in the width direction at an interval of 10 cm and 30 m in the length direction at an interval of 3 m, and the standard deviation of thickness was measured using the measured thickness.

Measurement of wettability

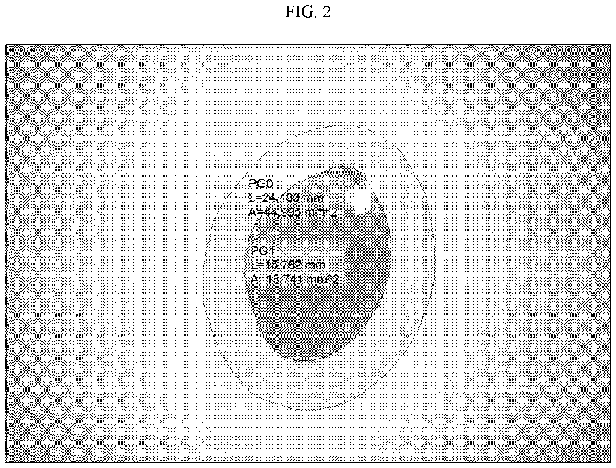

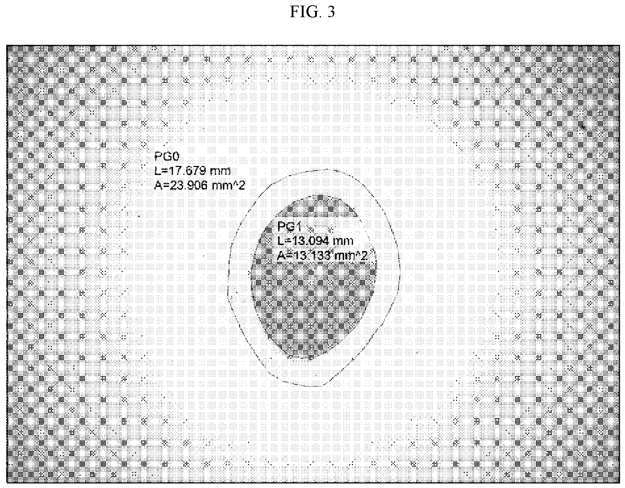

After dripping a droplet of 4 $\mu$m of dimethyl carbonate (DMC) on the surface of each of the separator substrates according to Example 1, Example 2 and Comparative Example 1, an area to which the droplet spread out was measured and the results are shown in FIGs. 1 to 3.

In FIGs. 1 to 3, PG0 indicates a region over which the solvent (DMC) spread, PG1 indicates a region of the separator surface stained with the solvent, L indicates the longest length in each of the PG0 region and the PG1 region, and A indicates the area of each of the PG0 region and the PG1 region. The wettability of the separator substrate was evaluated through the area of the PG0 region.

[TABLE 1]

| | Type of polyolefin | Gel fraction (%) | Cr (ppm) | Si (ppm) | Al (ppm) | Fracture temperature (°C) | Number of spots | Thickness uniformity ($\Delta$d, $\mu$m) | Wettability (Area, mm$^2$) |
|---|---|---|---|---|---|---|---|---|---|
| Example 1 | Cr-type | 45 | 9 | 50 | - | 202 | 0 | 0.20 | 54 |
| Example 2 | Cr-type:ZT-type (1:9) | 12 | 1.2 | 35 | 31 | 194 | 0 | 0.28 | 44 |
| Comparative Example 1 | ZT-type | 0 | - | - | 37 | 152 | 0 | 0.58 | 23 |
| Comparative Example2 | Cr-type | 0 | 9 | - | - | 148 | 0 | 0.30 | 22 |
| Comparative Example 3 | ZT-type | 0 | - | 15 | 35 | 151 | 8 | 0.69 | 31 |
| Comparative Example 4 | Cr-type | 52 | 8 | 85 | - | 200 | 21 | 0.48 | 58 |

(continued)

|  | Type of polyolefin | Gel fraction (%) | Cr (ppm) | Si (ppm) | Al (ppm) | Fracture temperature (°C) | Number of spots | Thickness uniformity ($\triangle$d, $\mu$m) | Wettability (Area, mm$^2$) |
|---|---|---|---|---|---|---|---|---|---|
| Comparative Example 5 | ZT-type | 0 | - | - | 34 | 152 | 0 | 0.54 | 25 |
| Comparative Example 6 | Cr-type | 43 | 8 | - | - | 203 | 0 | 0.20 | 21 |
| Comparative Example 7 | Cr-type:ZT-type (5:95) | 3 | 0.3 | 16 | 32 | 155 | 0 | 0.37 | 29 |

According to the results of TABLE 1, it was confirmed that the separator substrates of Examples 1 and 2 prepared by using the Cr-type polyolefin resin as the raw material and applying the coating solution comprising the thermal initiator and the silane compound with vinyl groups after extruding the resin had the gel fraction of 45% and 12%, respectively, and both had the standard deviation of thickness of 0.5 $\mu$m or less and the fracture temperature of 160°C or higher.

In contrast, it was confirmed that the separator substrate of Comparative Example 1 using the ZT-type polyolefin resin alone without coating with the coating solution comprising the thermal initiator and the silane compound with vinyl groups was not good in terms of gel fraction, fracture temperature and thickness uniformity. Additionally, it was confirmed that Comparative Example 2 using the Cr-type polyolefin resin without coating with the coating solution comprising the thermal initiator and the silane compound with vinyl groups was still not good in terms of gel fraction and fracture temperature. Additionally, it was confirmed that in the case of Comparative Examples 3 and 4 in which the thermal initiator and the silane compound with vinyl groups were fed together with the polyolefin raw material at the raw material feeding step, their outward appearance characteristics or thickness uniformity were not good.

Furthermore, it was confirmed that Comparative Example 5 using the ZT-type polyolefin resin alone as the raw material and involving the step of applying the coating solution comprising the thermal initiator and the silane compound with vinyl groups was still not good in terms of thickness uniformity, Comparative Example 6 prepared using the coating solution not comprising the silane compound with vinyl groups was not good in terms of wettability, and Comparative Example 7 using a small amount of Cr-type polyolefin resin as the polyolefin resin was still not good in terms of fracture temperature.

While the present disclosure has been hereinabove described with reference to the embodiments and the accompanying drawings, it is obvious to those skilled in the art that a variety of changes and modifications may be made within the scope of the present disclosure based on the foregoing description.

**Claims**

1.  A separator substrate for an electrochemical device, comprising:

    a crosslinked polyolefin resin and chromium (Cr),
    wherein the crosslinked polyolefin resin comprises a silicon-containing organic group grafted to a polyolefin chain,
    wherein a gel fraction of the separator substrate is 3% to 80%,
    wherein a standard deviation ($\triangle$d) of thickness measured in at least 100 random points is 0.5 $\mu$m or less, and
    wherein a number of spots having a long side of 50 $\mu$m or more in length per 1m$^2$ is 10 or less.

2.  The separator substrate for the electrochemical device according to claim 1, wherein the silicon-containing organic group is a residue from a silane compound with a vinyl group, and
    wherein the silane compound with the vinyl group includes vinyltrimethoxysilane, vinyltriethoxysilane, vinyltriacetoxysilane, (3-methacryloxypropyl)trimethoxysilane, (3-methacryloxypropyl)triethoxysilane, vinylmethyldimethoxysilane, vinyl-tris(2-methoxyethoxy)silane, vinylmethyldiethoxysilane or a mixture thereof.

3. The separator substrate for the electrochemical device according to claim 1, wherein the chromium is included in an amount of 0.1 to 20 ppm.

4. The separator substrate for the electrochemical device according to claim 1, wherein the gel fraction of the separator substrate is 3% to 50%.

5. The separator substrate for the electrochemical device according to claim 1, wherein a crosslink structure in the crosslinked polyolefin resin includes a structure resulting from radical polymerization reaction between vinyl groups through a medium of a thermal initiator.

6. The separator substrate for the electrochemical device according to claim 5, wherein the thermal initiator includes a peroxide-based compound, a persulfate-based compound, an azo-based compound or a mixture thereof.

7. The separator substrate for the electrochemical device according to claim 1, wherein the separator substrate for the electrochemical device further comprises at least one of titanium (Ti), aluminum (Al), magnesium (Mg), zirconium (Zr) or vanadium (V).

8. The separator substrate for the electrochemical device according to claim 1, wherein the standard deviation ($\triangle$d) of thickness measured in the at least 100 random points of the separator substrate is 0.3 $\mu$m or less.

9. A method for manufacturing a separator substrate for an electrochemical device, comprising:

carrying out melt extrusion of a raw material comprising a polyolefin resin to obtain a molten polymer extrudate;
forming and stretching the obtained molten polymer extrudate to obtain a polymer sheet;
applying a coating solution containing a thermal initiator and a silane compound with a vinyl group to the polymer sheet; and
drying and heat-setting the polymer sheet coated with the coating solution,
wherein the polyolefin resin includes a polyolefin resin prepared using an olefin polymerization catalyst containing chromium.

10. The method for manufacturing the separator substrate for the electrochemical device according to claim 9, wherein the polyolefin resin as the raw material includes a polyolefin resin having 100 or more terminal vinyl groups per 1,000,000 carbon atoms.

11. The method for manufacturing the separator substrate for the electrochemical device according to claim 9, wherein the raw material further comprises a polyolefin resin prepared using an olefin polymerization catalyst free from chromium (Cr) and containing at least one of titanium (Ti), aluminum (Al), magnesium (Mg), zirconium (Zr) or vanadium (V).

12. The method for manufacturing the separator substrate for the electrochemical device according to claim 9, wherein the polyolefin resin prepared using the olefin polymerization catalyst containing chromium is included in an amount of 10 wt% or more based on a total weight of the polyolefin resin as the raw material.

13. A separator for an electrochemical device, comprising:

the separator substrate according to any one of claims 1 to 8; and
an inorganic coating layer on at least one surface of the separator substrate,
wherein the inorganic coating layer comprises inorganic particles and a binder material.

14. An electrode assembly, comprising:
a positive electrode, a negative electrode and the separator according to claim 13 between the positive electrode and the negative electrode.

FIG. 1

FIG. 2

FIG. 3

## INTERNATIONAL SEARCH REPORT

| International application No. |
|---|
| **PCT/KR2023/017406** |

### A. CLASSIFICATION OF SUBJECT MATTER

**H01M 50/417**(2021.01)i; **H01M 50/489**(2021.01)i; **H01M 50/446**(2021.01)i; **H01M 50/403**(2021.01)i; **H01M 50/451**(2021.01)i; **H01M 10/052**(2010.01)i

According to International Patent Classification (IPC) or to both national classification and IPC

### B. FIELDS SEARCHED

Minimum documentation searched (classification system followed by classification symbols)

H01M 50/417(2021.01); C08F 4/6592(2006.01); C08F 4/69(2006.01); H01M 10/052(2010.01); H01M 10/42(2006.01); H01M 50/40(2021.01); H01M 50/409(2021.01); H01M 50/489(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리올레핀(polyolefin), 크롬(chrome), 분리막(separator), 실란(silane), 반점(spot)

### C. DOCUMENTS CONSIDERED TO BE RELEVANT

| Category* | Citation of document, with indication, where appropriate, of the relevant passages | Relevant to claim No. |
|---|---|---|
| Y | KR 10-2067717 B1 (LG CHEM, LTD.) 20 January 2020 (2020-01-20)<br>See paragraphs [0011]-[0089] and claim 3. | 1-14 |
| Y | KR 10-2014-0126613 A (LG CHEM, LTD.) 31 October 2014 (2014-10-31)<br>See claims 1-10. | 1-14 |
| Y | KR 10-2020-0078329 A (LG CHEM, LTD.) 01 July 2020 (2020-07-01)<br>See claims 1 and 6-7. | 7,11 |
| Y | KR 10-2022-0131648 A (TORAY BATTERY SEPARATOR FILM KOREA LIMITED) 29 September 2022 (2022-09-29)<br>See claim 2. | 10 |
| Y | KR 10-2020-0085190 A (LG CHEM, LTD.) 14 July 2020 (2020-07-14)<br>See claim 16. | 13-14 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 February 2024** | **14 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/017406**

| Patent document cited in search report | | | Publication date (day/month/year) | Patent family member(s) | | | Publication date (day/month/year) |
|---|---|---|---|---|---|---|---|
| KR | 10-2067717 | B1 | 20 January 2020 | KR | 10-2020-0077386 | A | 30 June 2020 |
| | | | | KR | 10-2328711 | B1 | 17 November 2021 |
| KR | 10-2014-0126613 | A | 31 October 2014 | CN | 104254547 | A | 31 December 2014 |
| | | | | CN | 104254547 | B | 08 June 2016 |
| | | | | EP | 2837640 | A1 | 18 February 2015 |
| | | | | EP | 2837640 | B1 | 07 September 2016 |
| | | | | JP | 2015-524870 | A | 27 August 2015 |
| | | | | JP | 6029757 | B2 | 24 November 2016 |
| | | | | KR | 10-1483247 | B1 | 16 January 2015 |
| | | | | US | 2016-0152742 | A1 | 02 June 2016 |
| | | | | US | 9447211 | B2 | 20 September 2016 |
| | | | | WO | 2014-175495 | A1 | 30 October 2014 |
| KR | 10-2020-0078329 | A | 01 July 2020 | CN | 111954570 | A | 17 November 2020 |
| | | | | CN | 111954570 | B | 28 October 2022 |
| | | | | EP | 3789106 | A1 | 10 March 2021 |
| | | | | JP | 2021-522999 | A | 02 September 2021 |
| | | | | JP | 2022-078313 | A | 24 May 2022 |
| | | | | JP | 7111837 | B2 | 02 August 2022 |
| | | | | JP | 7271752 | B2 | 11 May 2023 |
| | | | | KR | 10-2380227 | B1 | 29 March 2022 |
| | | | | US | 2021-0125792 | A1 | 29 April 2021 |
| | | | | WO | 2020-130412 | A1 | 25 June 2020 |
| KR | 10-2022-0131648 | A | 29 September 2022 | KR | 10-2574111 | B1 | 01 September 2023 |
| KR | 10-2020-0085190 | A | 14 July 2020 | None | | | |

Form PCT/ISA/210 (patent family annex) (July 2022)

**REFERENCES CITED IN THE DESCRIPTION**

**Patent documents cited in the description**

- KR 1020220144748